# EUROPEAN PATENT APPLICATION

(11) **EP 1 403 164 A1**
(43) Date of publication of application: **31.03.2004**
(21) Application number: 03021922.4
(22) Date of filing: 29.09.2003
(51) Int. Cl.: B62B 5/06, B62B 5/00, B62B 3/02, B62B 3/14

(54) **A cart for transporting goods and objects**

(30) Priority: 30.09.2002 IT TO20020847
(71) Applicant: Plastimark S.p.A., 12035 Racconigi (Cuneo) (IT)
(72) Inventor: Bergia, Michelangelo, 12030 Cavallermaggiore (Cuneo) (IT)
(74) Representative: Buzzi, Franco

(57) **Abstract**

A cart (1) for transporting goods and objects comprising a support structure (2) having a base (3) with wheels (10, 13) for transporting a basket container (15), and a thrust part (5, 6) positioned posteriorly to the base (3), and connected thereto through an intermediate upright element (18) able to be selectively inserted and removed to position said thrust part (5, 6) at a respectively greater or smaller height relative to the base (3).

## Description

The present invention relates to carts for transporting objects, for instance goods within stores or inside airports, of the type comprising a support structure having a base with wheels for transporting a basket container, and a thrust part positioned posteriorly to the base.

Traditionally, such carts have a prevalently horizontal development, in the sense that the base is elongated anteriorly to the thrust part and the basket container has a similar configuration, able to make available a large volume for stowing goods.

More recently, supermarket carts have been proposed with lesser horizontal development and greater vertical development, with one or more basket containers of smaller capacity superposed on each other, intended for use within stores with restricted spaces for the circulation of the carts or intended for handling objects in locations where sufficient manoeuvrability is required.

The present invention relates more specifically to the carts of the second type, and its object is to improve their structure both in relation to the economy of production of the parts and of their assembly, and in terms of flexibility of use.

According to the invention, this object is achieved by means of a cart of the type defined at the outset, whose primary characteristic resides in the fact that the aforesaid thrust part is connected to the base through an intermediate upright element able to be selectively inserted and removed to position said thrust part at a respectively greater or smaller height relative to the base.

Thanks to this solution idea, the cart according to the invention, whose components are conveniently made of pressed plastic material, can be assembled according to two different alternative configurations corresponding respectively to the presence and to the presence and to the absence of the intermediate upright element, whereby in the first configuration the cart is normally equipped with a second basket container positioned above said basket container, and in the second configuration the cart can be conveniently and easily manoeuvred by shorter users, for instance children.

The base and the upright element can advantageously be configured in such a way as to allow the basket container and of the second basket container, if present, to be retained in rapidly removable fashion.

Moreover, according to a preferred embodiment of the invention, the base is provided with a pair of rear wheels and with a single swivelling front wheel, which makes it particularly easy to handle and convenient to manoeuvre even in very restricted spaces.

Further features and advantages of the invention shall become more readily apparent from the detailed description that follows, with reference to the accompanying drawings, provided purely by way of non limiting example, in which:
- Figure 1 is a schematic perspective view of a first alternative configuration of the cart according to the invention,
- Figure 2 is a similar view to Figure 1, showing a second alternative configuration of the cart,
- Figure 3 is an exploded perspective view of Figure 1, and
- Figure 4 is an exploded perspective view of Figure 2.

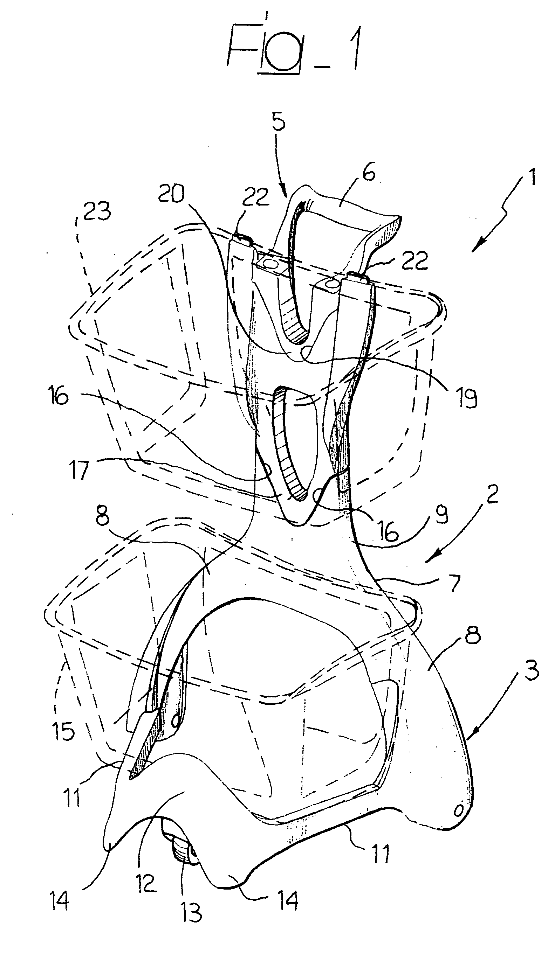

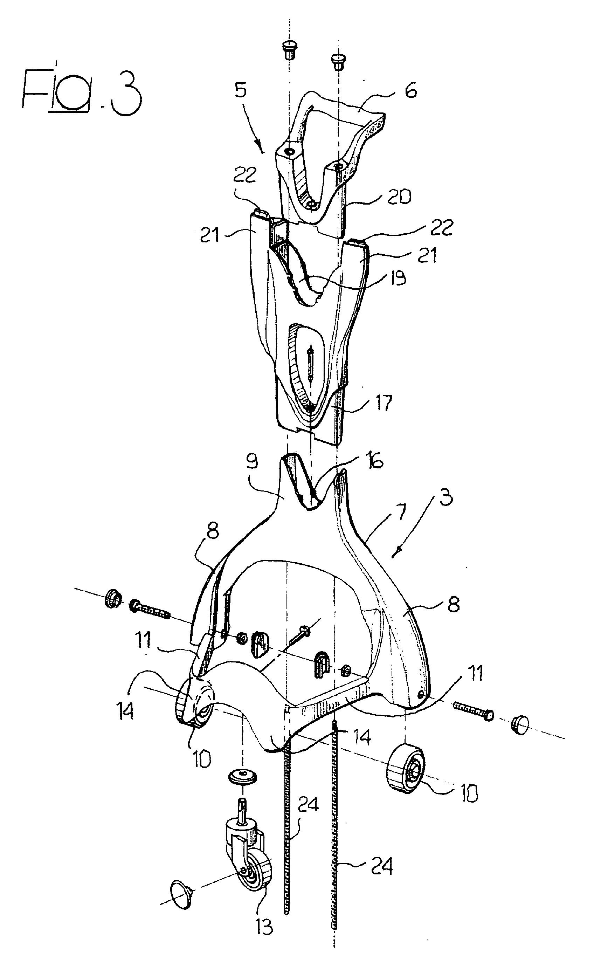

Referring initially to Figures 1 and 3, the number 1 generically designates in its entirety a cart according to the invention for transporting objects, for instance goods within stores or inside airports, having a support structure 2 constituted by a base 3 provided posteriorly with a thrust part 5 including a manoeuvring handle 6.

The base 3, constituted by a single piece of moulded plastic material, comprises a rear part 7 having a general upside down "Y" configuration with two arched lateral lower branch 8 and a central upper branch 9 projecting upwards for a short length.

From the lower end of each lateral branch 8, in correspondence with which is positioned a respective wheel 10, a respective horizontal arm 11 projects forward. The front ends of the two horizontal arms 11 are joined by an upwardly arched element 12 centrally bearing a single swivelling front wheel 13 and forming, at the opposite sides thereof, two downward projecting appendages 14 defining respective upset-preventing elements.

The space defined between the lateral arms 8, the horizontal arms 11, and the front junction part 12 is capable of housing a basket container 15, shown with dashed line in Figure 1, for containing goods. Said basket container 15 is simply fitted by insertion onto the base 3, which allows for its rapid removal in case of need and an equally easy repositioning onto the base 3.

The upper end of the central arm 9 of the rear part 7 of the base 3 is formed with a concave seat 16 able to be coupled in snap-on fashion with the lower end 17, having complementary shape, of an intermediate upright element 18 on whose top is applied in the manner clarified above, the thrust part 5.

The top of the upright element 18 is formed with a concave seat 19 similarly shaped to the upper concave seat 16 of the central vertical arm 9 of the base 3, within which is able to be engaged the lower end 20 of the thrust part 5, which lower end 20 in turn has a similar shape to that of the lower end 17 of the upright element 18, i.e. a shape that is also complementary to that of the concave upper seat 16.

On the opposite sides of the concave upper seat 19, the upright element 18 has two wings 21 each of which is formed superiorly with a respective latching projection 22 usable for the rapidly disengageable retention of a second basket container 23, shown with dashed line in Figure 1, in a position overlying the basket container 15 borne by the base 3.

For the assembly between the base 3, the intermediate upright element 18 and the thrust part 5 are provided, for instance, two threaded tie rods 24 extending vertically through the vertical branch 9 of the base 3, the intermediate upright element 18 and the thrust part 5, on the opposite side of the seats 16 and 19. Naturally, for said assembly the threaded bars 24, shown in Figure 3, may be replaced by equivalent systems, such as snap-on coupling organs and the like.

The configuration of the cart according to the invention as described with reference to Figures 1 through 3 corresponds to an arrangement that is, so to speak, complete: in use with this configuration, both basket containers 15, 23 may be used together, or only the container 15 or only the container 23 may selectively be used.

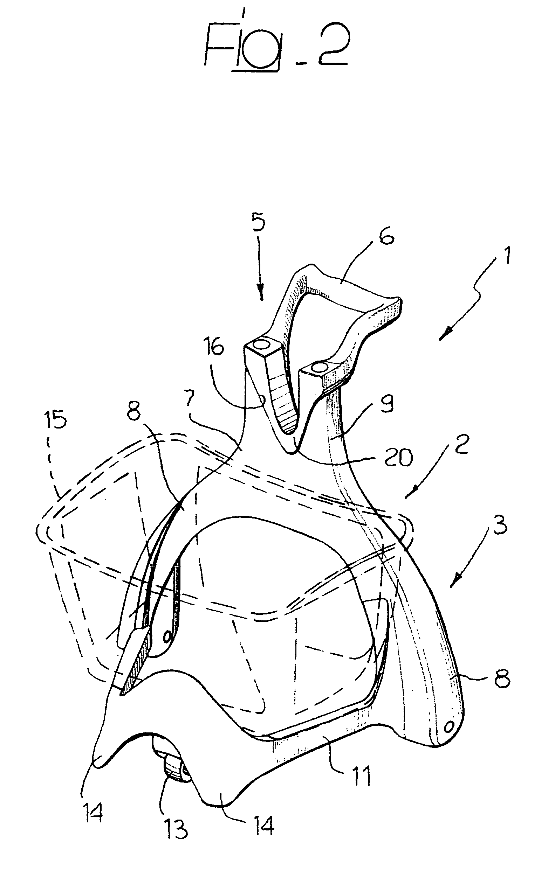

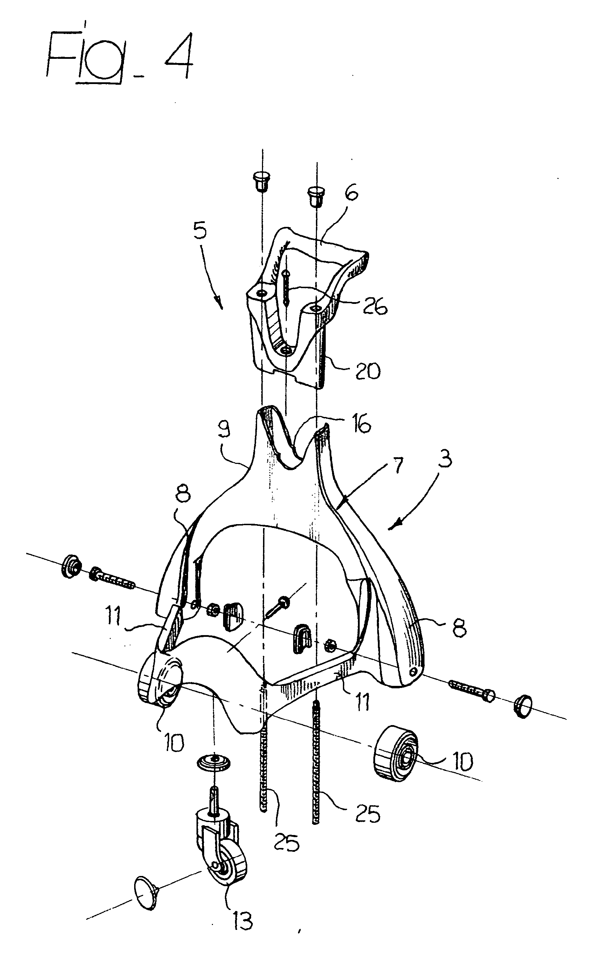

Starting from this configuration, the supermarket cart according to the invention can easily and rapidly be transformed into a condition that is, so to speak, reduced, shown in Figures 2 and 4, in which it has a considerably smaller vertical extension, suitable in particular to its use by users having short height, for example children, and also as a movable support for stacking the basket containers. This is achieved by simply removing the intermediate upright element 18, and directly coupling the thrust part 5 to the base 3, engaging the lower end 20 of the thrust part 5 directly into the upper seat 16 of the base 3. In this configuration, the threaded bars 24 are replaced by threaded bars 25 of correspondingly lesser length, shown in Figure 4, or even omitted altogether, simply locking the thrust part 5 relative to the seat 16 with a pin or split pin 26.

In any case, the bars 25 also serve the important function of neutralising any play produced in use between the various components of the carts assembled thereby, which components can also be interconnected with clearances of a few millimetres by means of cone frustum or pyramid frustum shaped couplings (not shown in the drawings), then tightened by means of the bars 25 which thus act in the manner of tie rods to achieve an optimal tightening.

In both configurations the cart can be conveniently pushed or pulled by the user and, as was clarified above, it can advantageously be used also in restricted spaces as a flexible and agile tool for transporting goods and objects.

All the structural components of the cart according to the invention (base 3, upright element 18, thrust part 5), as well as the basket containers 15 and 23 are advantageously obtained by moulding plastic materials.

Naturally, the construction details and the embodiments may vary widely relative to what is described and illustrated herein, without thereby departing from the scope of the present invention, as it is defined in the claims that follow.

Thus, for instance, the wheels of the cart may be four instead of three, and also all swivelling or all fixed, or partly swivelling and partly fixed.

There could be one basket container applicable to the cart, or to the upright element, or there could be two as in the case of the illustrated example, or three or even four or more.

## Claims

1. A cart (1) for transporting goods and objects, comprising a support structure (2) having a base (3) with wheels (10, 13) for transporting a basket container (15), and a thrust part (5, 6) positioned posteriorly to the base (3), **characterised in that** said thrust part (5, 6) is connected to the base (3) through an intermediate upright element (18) able to be selectively inserted and removed to position said thrust part (5, 6) at a respectively greater or smaller height relative to the base (3).

2. A cart as claimed in claim 1, **characterised in that** said upright element (18) is adapted to allow the application of at least a second basket container (23) positioned overlying the base (3).

3. A cart as claimed in claim 2, **characterised in that** said upright element (18) is provided with latching means (22) for the rapidly removable retention of said at least a second basket container (23).

4. A cart as claimed in any of the previous claims, **characterised in that** said base (3) is shaped to allow a rapidly removable fitting engagement of said basket container (15).

5. A cart as claimed in any of the previous claims, **characterised in that** it comprises means (24) for the rapidly removable connection between said base (3), said upright element (18) and said thrust part (5, 6).

6. A cart as claimed in claim 5, **characterised in that** said base (3) has an upwardly projecting rear support (9) formed with a concave seat (16) for the engagement of a corresponding complementary end (17) of said upright element (18) or, respectively, of a corresponding complementary end (20) of said thrust part (5, 6).

7. A cart as claimed in claim 6, **characterised in that** said upright element superiorly has a concave seat (19) for the engagement of said complementary end (20) of the thrust part (5, 6).

8. A cart as claimed in any of the previous claims, **characterised in that** said base (3) is provided with a pair of rear wheels (10) and with at least a single front wheel (13), which wheels may be fixed or swivelling.

9. A cart as claimed in claim 8, **characterised in that** said base (3) is formed, on one side and on the opposite side of said at least a front wheel (13), with respective upset-preventing appendages (14).

10. A cart as claimed in any of the previous claims, **characterised in that** said base (3), said thrust part (5, 6) and said upright element (18) are made of moulded plastic material.
